(19) Europäisches Patentamt / European Patent Office / Office européen des brevets

(11) **EP 4 425 818 A1**

(12) **DEMANDE DE BREVET EUROPEEN**

(43) Date de publication:
**04.09.2024   Bulletin 2024/36**

(51) Classification Internationale des Brevets (IPC):
***H04L 9/00*** *(2022.01)*

(21) Numéro de dépôt: **23219111.4**

(52) Classification Coopérative des Brevets (CPC):
**H04L 9/008**

(22) Date de dépôt: **21.12.2023**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité:   **01.03.2023   FR 2301900**

(71) Demandeur: **IDEMIA Identity & Security France 92400 Courbevoie (FR)**

(72) Inventeurs:
  • **Chabanne, Hervé 92400 COURBEVOIE (FR)**
  • **Ibarrondo, Alberto 92400 COURBEVOIE (FR)**

(74) Mandataire: **Idemia 2, place Samuel de Champlain 92400 Courbevoie (FR)**

(54) **PROCÉDÉ DE CONTRÔLE D'IDENTITÉ PARTIELLEMENT DISTRIBUÉ**

(57)    Procédé comprenant : calcul (204) d'un chiffré ($c_s$) d'un score représentant une distance entre une donnée biométrique d'épreuve (x) et une donnée de référence ($y_u$) ; mise en oeuvre des étapes suivantes par un dispositif d'indice i=1,2: traitement de déchiffrement et de masquage au chiffré ($c_s$) du score à l'aide d'une clé de déchiffrement secondaire ($(sk)_i$) d'indice i et d'un masque secondaire ($(r)_i$) d'indice i, le traitement produisant une donnée ($\hat{s}$) représentant le score sous une forme déchiffrée et masquée par un masque primaire (r) sans avoir calculé le score en clair, et génération (308) d'un résultat partiel ($o_i$) d'indice i à partir de la donnée (9) et d'une donnée de démasquage ($k_i$) d'indice i; dans lequel les résultats partiels ($o_1$; $o_2$) permettent le calcul d'un résultat (o) indiquant si la donnée biométrique d'épreuve correspond à la donnée de référence.

Figure 3

EP 4 425 818 A1

**Description**

**DOMAINE DE L'INVENTION**

La présente divulgation concerne un procédé de contrôle d'identité.

**ETAT DE LA TECHNIQUE**

Un procédé conventionnel pour vérifier si un individu est enrôlé dans une base de données comprend les étapes suivantes. Il est acquis une donnée biométrique d'épreuve se rapportant à l'individu à contrôler. Ensuite, il est calculé un score représentatif d'une distance entre la donnée biométrique d'épreuve et une donnée biométrique de référence contenue dans la base de données. Ce score est ensuite comparé avec un seuil. Un résultat de contrôle indiquant si la donnée biométrique d'épreuve correspond ou non à la donnée biométrique de référence est obtenu à l'issue de cette comparaison.

Dans le document ayant pour titre « Colmade : Collaborative Masking in Auditable Decryption for BFV-based Homomorphic Encryption », il a été décrit un procédé reprenant ce principe général, avec toutefois les particularités suivantes. Premièrement, le procédé Colmade réalise le calcul du score et la comparaison avec un seuil dans le domaine chiffré. Deuxièmement, le procédé Colmade comprend des étapes centralisées, et des étapes distribuées sur plusieurs entités : ces entités réalisent des calculs en parallèle produisant des résultats partiels, ces résultats partiels devant être ensuite recombinés afin d'aboutir au résultat de contrôle.

Or, la durée d'exécution du procédé Colmade s'avère longue.

**EXPOSE DE L'INVENTION**

Un but d'invention est de vérifier si un individu est enrôlé dans une base de données sans requérir une durée d'exécution excessive et de manière sécurisée.

Ce but est atteint par un procédé comprenant les étapes suivantes :

- calcul d'un chiffré d'un score représentant une distance entre une donnée biométrique d'épreuve se rapportant à un individu et une donnée biométrique de référence, le chiffré du score étant préalablement calculé à partir de la donnée biométrique d'épreuve et d'un chiffré de la donnée biométrique de référence, le chiffré de la donnée biométrique de référence résultant d'un chiffrement de la donnée biométrique de référence à l'aide d'une clé de chiffrement primaire,

- pour i étant égal à 1 et 2, mise en oeuvre des étapes suivantes par un dispositif d'indice i:

  - application d'un traitement de déchiffrement et de masquage au chiffré du score à l'aide d'une clé de déchiffrement secondaire d'indice i et d'un masque secondaire d'indice i, le traitement de déchiffrage et de masquage produisant une donnée représentant le score sous une forme déchiffrée et masquée par un masque primaire, et ce sans avoir calculé le score en clair,

  - génération d'un résultat partiel d'indice i à partir de la donnée et d'une donnée de démasquage d'indice i associée au masque secondaire d'indice i,

- dans lequel :

  - les dispositifs d'indices respectifs 1 et 2 sont distincts,

  - les clés de déchiffrement secondaires d'indices respectifs 1 et 2 sont issues d'une clé de déchiffrement primaire associée à la clé de chiffrement,

  - les masques secondaires d'indices respectifs 1 et 2 sont issus du masque primaire.

Dans le procédé proposé, l'étape de calcul du chiffré du score constitue une étape centralisée beaucoup plus rapide d'exécution que l'étape centralisée réalisée dans le procédé Colmade. Les inventeurs ont pu constater que cette étape centralisée en combinaison avec les traitements distribués sur au moins une paire de dispositifs participants permettent d'obtenir un résultat de contrôle de manière plus rapidement qu'avec le procédé Colmade, à ressources de calcul égales. En particulier, le masquage réalisé apporte de la sécurité car le score en clair n'est jamais calculé.

Un autre avantage du procédé proposé est qu'elle peut être mise en oeuvre dans un système où les données biométriques de référence sont stockées dans une seule base de données. Ceci constitue un avantage par rapport à des procédés requérant l'utilisation conjointe de plusieurs bases de données différentes.

Le procédé proposé peut également comprendre les caractéristique suivantes, prises seules ou combinées entre elles à chaque fois que cela est possible.

De préférence, le traitement de déchiffrement et de masquage mis en en oeuvre par le dispositif d'indice i comprend les étapes suivantes :

- calcul d'une donnée intermédiaire d'indice i à partir des données suivantes :

  - une première partie du chiffré du score,
  - la clé de déchiffrement secondaire d'indice i,
  - le masque secondaire d'indice i, et
  - un aléa généré par le dispositif d'indice i,

- réception d'une donnée intermédiaire d'indice j envoyée par le dispositif d'indice $j{\neq}i$,

- calcul de la donnée représentant le score sous une forme déchiffrée à l'aide de la clé de déchiffrement

secondaire $\langle sk \rangle_i$ d'indice i puis masquée par le masque, à partir des données suivantes :

- les données intermédiaires d'indices respectifs 1 et 2,
- une deuxième partie du chiffré du score.

De préférence, la donnée intermédiaire $\langle c_{\hat{s}_b} \rangle_i$ d'indice i est calculée comme suit :

- 
$$\langle c_{\hat{s}_b} \rangle_i = c_{s_b} \langle sk \rangle_i + \langle r \rangle_i + e_i$$

- dans lequel

  - $c_{s_b}$ est la première partie du chiffré du score,
  - $\langle sk \rangle_i$ est la clé de déchiffrement secondaire d'indice i,
  - $\langle r \rangle_i$ est le masque secondaire d'indice i,
  - $e_i$ est l'aléa généré par le dispositif d'indice i.

De préférence, la donnée représentant le score sous une forme déchiffrée à l'aide de la clé de déchiffrement secondaire $\langle sk \rangle_i$ d'indice i puis masquée à l'aide du masque primaire est calculée comme suit :

$$\hat{s} = \left[\left\lfloor \frac{t}{q} \left[c_{s_a} + \langle c_{\hat{s}_b} \rangle_1 + \langle c_{\hat{s}_b} \rangle_2 \right]_q \right\rceil \right]_t$$

- dans lequel

  - $\langle c_{\hat{s}_b} \rangle_1$ est la donnée intermédiaire d'indice 1,
  - $\langle c_{\hat{s}_b} \rangle_2$ est la donnée intermédiaire d'indice 2,
  - $c_a$ est la deuxième partie du chiffré du score,
  - $t$ et $q$ sont deux entiers constituant des paramètres d'un schéma de chiffrement de Brakerski/Fan-Vercauteren,
  - $\lfloor ... \rceil$ désigne l'opérateur d'arrondi à l'entier le plus proche,
  - $[...]_q$ désigne l'opérateur modulo q,
  - $[...]_t$ désigne l'opérateur modulo t.

De préférence, le résultat de contrôle est égal à la somme des résultats partiels d'indices respectifs 1 et 2.

De préférence, au moins une des données suivantes est une donnée à usage unique pour la donnée biométrique d'épreuve, voire pour le chiffré du score :

- le masque secondaire d'indice i,
- la donnée de démasquage d'indice i,
- la clé de déchiffrement secondaire d'indice i.

De préférence, le calcul du chiffré du score est un calcul linéaire ou polynômial.
De préférence,

- le calcul du chiffré est mis en oeuvre mis en oeuvre par un serveur distinct des dispositifs d'indices 1 et 2, et/ou
- le résultat de sortie est calculé à partir des résultats partiels d'indices respectifs 1 et 2 par un dispositif de sortie distinct des dispositifs d'indices 1 et 2.

Il est également proposé un produit programme d'ordinateur comprenant des instructions de code de programme pour l'exécution des étapes du procédé proposé, lorsque ce programme est exécuté par un dispositif ou un ensemble de dispositifs. Il est encore proposé une mémoire lisible par ordinateur stockant des instructions exécutables par un dispositif pour l'exécution des étapes du procédé proposé.
Il est également proposé un système comprenant :

- un serveur configuré pour calculer un chiffré d'un score représentant une distance entre une donnée biométrique d'épreuve se rapportant à un individu et une donnée biométrique de référence, le chiffré du score étant préalablement calculé à partir de la donnée biométrique d'épreuve et d'un chiffré de la donnée biométrique de référence, le chiffré de la donnée biométrique de référence résultant d'un chiffrement de la donnée biométrique de référence à l'aide d'une clé de chiffrement primaire,
- deux dispositifs d'indices respectifs 1 et 2, dans lequel pour i étant égal à 1 et 2, le dispositif d'indice i est configuré pour :

  - appliquer un traitement de déchiffrement et de masquage au chiffré du score à l'aide d'une clé de déchiffrement secondaire d'indice i et d'un masque secondaire d'indice i, le traitement de déchiffrage et de masquage produisant une donnée représentant le score sous une forme déchiffrée et masquée par un masque primaire, et ce sans avoir calculé le score en clair,
  - génération d'un résultat partiel d'indice i à partir de la donnée et d'une donnée de démasquage d'indice i associée au masque secondaire d'indice i,

- dans lequel :

  - les clés de déchiffrement secondaires d'indices respectifs 1 et 2 sont issues d'une clé de déchiffrement primaire associée à la clé de chiffrement,
  - les masques secondaires d'indices respectifs 1 et 2 sont issus du masque primaire,
  - les résultats partiels d'indices respectifs 1 et 2 permettent le calcul d'un résultat de contrôle indiquant si la donnée biométrique d'épreuve correspond ou non à la donnée biométrique de référence.

## DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :

La figure 1 et la figure 2 illustrent de façon schématique différents dispositifs faisant partie d'un système selon un mode de réalisation, utilisable pour contrôler l'identité d'individus.

La figure 3 est un organigramme d'étapes d'un procédé de contrôle d'identité selon un mode de réalisation.

Sur l'ensemble des figures, les éléments similaires portent des références identiques.

## DESCRIPTION DETAILLEE DE L'INVENTION

### Système pour contrôler l'identité d'un individu

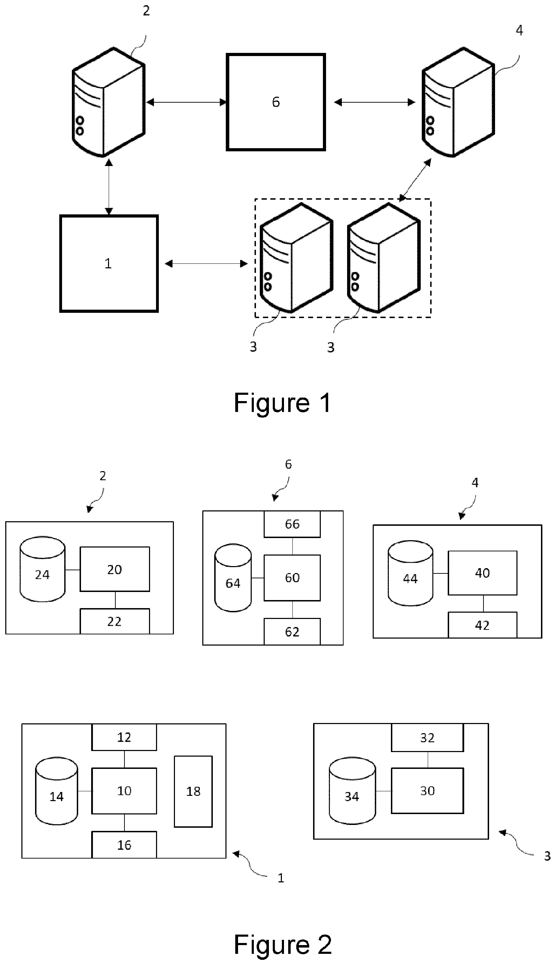

En référence à la figure 1 et à la figure 2, un système comprend un dispositif de contrôle 1, un serveur de stockage 2, et au moins une paire de dispositifs participants 3, un serveur de confiance 4 et un dispositif d'enrôlement 6.

Le dispositif de contrôle 1 comprend un processeur 10, une interface de communication 12 pour communiquer avec le serveur de stockage 2 et chaque dispositif participant, une mémoire 14 et un capteur biométrique 16.

Le processeur 10 est configuré pour mettre en oeuvre certaines étapes d'un procédé qui sera décrit plus loin. Le processeur peut avoir n'importe quelle structure. Le processeur comprend un ou plusieurs coeurs, chaque coeur étant configuré pour exécuter les instructions de code d'un programme de manière à mettre en oeuvre les étapes précitées.

L'interface de communication 12 est par exemple de type radio sans fil, et utilise un protocole de communication quelconque (Wi-Fi, Bluetooth, etc.).

La mémoire 14 est adaptée pour mémoriser des données manipulées ou produites par le processeur. La mémoire 14 est de type quelconque. Conventionnellement, la mémoire comprend une mémoire volatile pour stocker des données temporairement, et une mémoire non-volatile pour stocker des données de manière persistante, c'est-à-dire d'une manière qui conserve les données lors d'une mise hors tension de la mémoire non volatile.

Le capteur biométrique 16 est configuré pour acquérir des données biométriques se rapportant à des individus. Par exemple, le capteur biométrique comprend une caméra configurée pour acquérir des images montrant le visage d'un individu, et pour extraire des données biométriques de telles images. Alternativement ou à titre complémentaire, le capteur biométrique comprend un capteur d'empreinte digitale et/ou un capteur d'iris.

Dans un mode de réalisation, le dispositif de contrôle 1 comprend en outre un portique 18 pouvant être fermé pour empêcher un individu d'accéder à une zone sécurisée, et être ouvert pour autoriser un tel accès. Le processeur 10 est dans ce cas configuré pour commander l'ouverture et la fermeture du portique 18. Par exemple, le dispositif de contrôle 1 se trouve dans un aéroport, et la zone sécurisée est une zone d'embarquement ; dans cette application particulière, les individus souhaitant accéder à la zone d'embarquement sont les passagers d'un vol, dont l'identité est à contrôler avant d'embarquer.

Le serveur de stockage 2 comprend un processeur 20, une interface de communication 22 pour communiquer avec le dispositif de contrôle 1, et une mémoire 24. Les informations fournies ci-dessus à propos du processeur 10 et de l'interface de communication 12 sont applicables également au processeur 20 et à l'interface de communication 22.

La mémoire 24 stocke une base de données biométriques protégées en confidentialité. Sont référencées dans la base de données des données biométriques se rapportant à des individus précédemment enrôlés. Les données biométriques d'un individu enrôlé ne sont pas en clair dans la base de données, mais sont au contraire protégées en confidentialité, c'est-à-dire sont une forme chiffrée, grâce à un chiffrement qui sera décrit dans la suite.

Chaque dispositif participant 3 comprend un processeur 30, une interface de communication 32 pour communiquer avec le dispositif de contrôle 1 et/ou les autres dispositifs participants 3, et une mémoire 34. Les informations fournies ci-dessus à propos du processeur 10 et de l'interface de communication 12 sont applicables également au processeur 30 et à l'interface de communication 32. Les communications entre les interfaces 12, 22 et les communications entre les interfaces 12, 32 peuvent utiliser des protocoles identiques ou bien différents.

Les dispositifs participants 3 sont distincts les uns des autres. Dans la suite, on va détailler un mode de réalisation dans lequel les dispositifs participants 3 sont distincts du dispositif de contrôle 1, du serveur de stockage 2, du dispositif d'enrôlement 4 et du dispositif d'enrôlement 6, comme cela est représenté sur la figure 1. Toutefois, dans d'autres modes de réalisation, il peut être envisagé que le dispositif de contrôle 1, le serveur de stockage 2, le dispositif d'enrôlement 4 et/ou le dispositif d'enrôlement 6 constitue l'un des dispositifs participants 3.

Le serveur de confiance 4 a pour fonction de générer des clés cryptographiques dont certaines sont utilisées par d'autres composants du système. Le serveur de confiance 4 comprend un processeur 40, une interface de communication 42 pour communiquer avec le dispositif d'enrôlement 6 et avec chaque dispositif participant 3, et une mémoire 44. Les informations fournies ci-dessus à propos du processeur 10, de l'interface de communication 12 et de la mémoire 14 sont applicables également au processeur 40, à l'interface de communication 42 et à la mémoire 44.

Le dispositif d'enrôlement 6 comprend un processeur 60, une interface de communication 62 pour communiquer avec le serveur de confiance 4 et avec le serveur de stockage 2, une mémoire 64 et un capteur biométrique 66. Les informations fournies ci-dessus à propos du processeur 10, de l'interface de communication 12, de la mémoire 14 et du capteur biométrique 16 sont applicables également au processeur 60, à l'interface 62, à la mémoire 64 et au capteur biométrique 66. Dans la suite, on va détailler un mode de réalisation dans le dispositif d'enrôlement 6 est distinct du dispositif de contrôle 1. Toutefois, dans d'autres modes de réalisation, le dispositif de contrôle 1 pourrait être utilisé comme dispositif d'enrôlement.

## Génération de clés

Les étapes suivantes sont mises en oeuvre à titre préliminaire au sein du système.

Le processeur 40 du serveur de confiance 4 génère une clé de chiffrement *pk* et une clé de déchiffrement *sk* associée, les deux clés formant une paire de clés cryptographiques, typiquement une paire de clés asymétriques. Les clés sont par exemple générées aléatoirement.

Les clés *pk, sk* sont mémorisées dans la mémoire 44.

Le serveur de confiance 4 envoie au dispositif d'enrôlement la clé de chiffrement *pk,* qui est par conséquent une clé publique. La clé de déchiffrement *sk* est au contraire une clé privée propre au serveur de confiance 4, et qui n'est donc pas communiquée à l'extérieur du serveur de confiance 4.

## Enrôlement

On suppose qu'un individu de référence à enrôler se présente à proximité du dispositif d'enrôlement 6. En pratique, l'individu de référence peut être un individu ayant obtenu le droit d'accéder à la zone sécurisée discutée précédemment. Lorsque le dispositif de contrôle 1 est placé dans un aéroport, la zone sécurisée peut donner accès à un avion, auquel cas le droit d'accéder à la zone sécurisée est conféré par un titre de transport attribué à l'individu de référence.

Le capteur biométrique 66 du dispositif d'enrôlement 6 acquiert une donnée biométrique de référence $y_u$ se rapportant à l'individu de référence.

Le processeur 60 chiffre la donnée biométrique $y_u$ de référence à l'aide de la clé de chiffrement *pk,* de sorte à obtenir un chiffré $c_{y_u}$ de la donnée biométrique $y_u$. En notant *BFV. encr*() la fonction de chiffrement utilisée lors de cette étape, on a :

$$c_{y_u} = BFV.encr(y_u, pk)$$

En particulier, il est possible d'utiliser lors de cette étape un chiffrement selon le schéma Brakerski/Fan-Vercauteren (BFV).

Le chiffré $c_{y_u}$ est transmis par le dispositif d'enrôlement 6 au serveur de stockage 2 via l'interface de communication 62.

Le serveur de stockage reçoit le chiffré $c_{y_u}$ via son interface de communication 22, et l'ajoute dans la base de données contenue dans sa mémoire 24. L'individu de référence est alors enrôlé.

Les étapes qui précèdent sont répétées par le dispositif d'enrôlement 6 pour plusieurs individus de référence à enrôler, moyennant quoi la base de données contenues dans la mémoire 24 stocke une pluralité de chiffrés se rapportant à différents individus de références. A chaque fois, la même clé de chiffrement *pk* est utilisée par le processeur 60.

## Contrôle d'identité

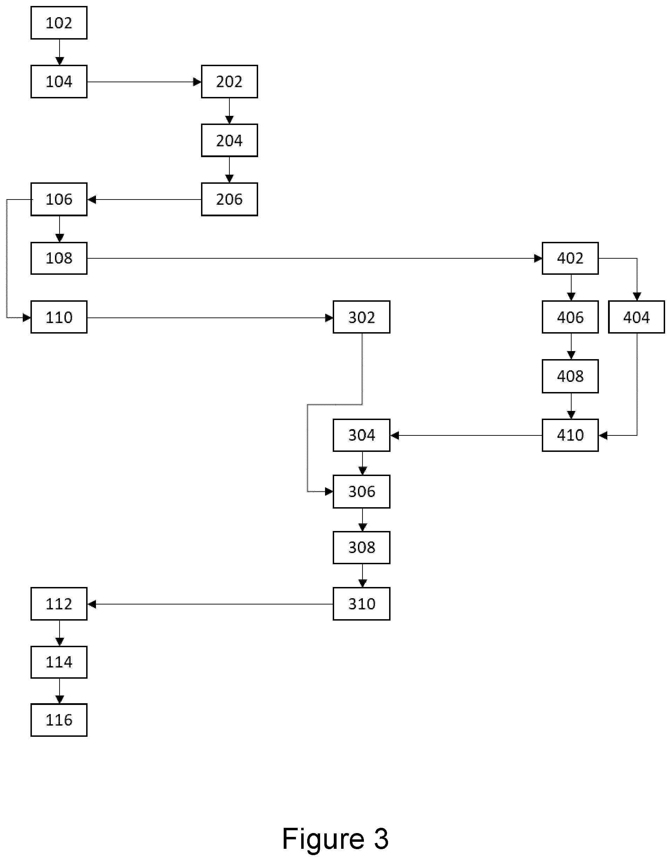

En référence à la figure 3, un procédé réalisé au moyen du système comprend les étapes suivantes. Lorsqu'il sera mentionné dans la suite que le dispositif de contrôle 1, le serveur 2, un dispositif participant 3 ou le serveur de confiance 4 met en oeuvre un traitement, on comprendra que ce traitement est plus précisément mis en oeuvre par le processeur correspondant 10, 20, 30, 40.

On suppose qu'un individu dont l'identité est à contrôler se présente à proximité du dispositif de contrôle 1. Par exemple, l'individu à contrôler se présente à une porte d'embarquement d'un aéroport où a été installé le dispositif de contrôle 1, avec la volonté de monter à bord d'un avion.

Dans une étape 102, le capteur biométrique 16 acquiert une donnée biométrique *x* se rapportant l'individu à contrôler. Dans la suite, cette donnée biométrique *x* est appelée « donnée biométrique d'épreuve » afin de la distinguer des données biométriques de référence discutées précédemment, et dont les chiffrés respectifs sont stockés par le serveur de stockage 2.

Dans une étape 104, le dispositif de contrôle 1 envoie au serveur 2 la donnée biométrique d'épreuve x, via l'interface de communication 12.

Dans une étape 202, le serveur 2 reçoit la donnée biométrique d'épreuve via l'interface de communication 22.

Dans une étape 204, le serveur 2 applique un traitement *BFV. dist*( ) prenant en entrée la donnée biométrique d'épreuve *x* et le chiffré $c_{y_u}$, le traitement produisant le chiffré $c_s$ d'un score *s*, ce score *s* représentant une distance entre la donnée biométrique d'épreuve *x* et la donnée biométrique de référence $y_u$ :

$$c_s = BFV.dist(x, c_{y_u})$$

Le calcul du chiffré $c_s$ est réalisé lors de cette étape dans le domaine chiffré. Autrement dit, cette étape ne comprend pas de calcul du score $s$ en clair. L'homme du métier peut utiliser les méthodes de chiffrement homomorphe connue de l'état de la technique.

La fonction *BFV.dist*() est préférentiellement une fonction linéaire ou polynomiale.

Par exemple, la distance représentée par le score est un produit scalaire entre la donnée biométrique d'épreuve $x$ et la donnée biométrique de référence $y_u$. Ainsi, le chiffré $c_s$ est le chiffré d'un tel produit scalaire.

Dans ce qui suit, on considérera un mode de réalisation dans lequel le chiffré $c_s$ du score se présente sous la forme d'une paire de données $c_{s_a}$, $c_{s_b}$. Ces deux données constituent deux portions différentes du chiffré.

Dans une étape 206, le serveur de stockage envoie le chiffré $c_s$ au dispositif 1 en réponse à la donnée biométrique d'épreuve $x$.

Dans une étape 106, le dispositif de contrôle 1 reçoit le chiffré $c_s$.

Dans une étape 108, le dispositif de contrôle 1 envoie au serveur de confiance 4 une requête associée au chiffré $c_s$.

Dans une étape 110, le dispositif de contrôle 1 envoie le chiffré $c_s$ à chacun des dispositifs participants 3. Les étapes 108, 110 peuvent être réalisées dans n'importe quel ordre ou bien être simultanées.

Dans une étape 402, le serveur de confiance 4 reçoit la requête émise lors de l'étape 108.

Dans une étape 404, le serveur de confiance 4 génère deux clés de déchiffrement secondaires $\langle sk \rangle_1$, $\langle sk \rangle_2$ issues de la clé de déchiffrement *sk*.

Par ailleurs, dans une étape 406, le serveur de confiance 4 génère un masque primaire r. Le masque primaire *r* est généré par une fonction *FSS. Setup*(). La fonction *FSS. Setup*() peut par exemple être la fonction *Funshade. Setup*() décrit dans le document « Funshade: Functional Secret Sharing for Two-Party Secure Thresholded Distance Evaluation ».

Dans une étape 408, le serveur génère :

- deux masques secondaires $\langle r \rangle_1$, $\langle r \rangle_2$ issus du masque primaire r, et
- deux données de démasquage $k_1$, $k_2$ qui leur sont associés.

Les étapes 404 et 406 peuvent être mises en oeuvre dans n'importe quel ordre. En particulier, l'étape 404 peut être réalisée avant, pendant ou après les étapes 406, 408.

Dans une étape 410 mise en oeuvre pour i étant égal à 1 et 2, le serveur de confiance 4 transmet au dispositif participant 3 d'indice i :

- la clé de déchiffrement secondaire $\langle sk \rangle_i$ d'indice i,

- le masque secondaire $\langle r \rangle_i$ d'indice i, et
- la donnée de démasquage $k_i$ d'indice i qui est associée au masque secondaire $\langle r \rangle_i$ d'indice i.

En revanche, une quelconque donnée d'indice 1 générée par le serveur de confiance 4 dans les étapes 402, 404 n'est pas envoyé au dispositif participant 3 d'indice 2, et vice versa.

Pour i étant égal à 1 et 2, le dispositif participant 3 d'indice i met en oeuvre les étapes suivantes.

Dans une étape 302, le dispositif participant 3 d'indice i reçoit le chiffré $c_s$.

Dans une étape 304, le dispositif participant 3 d'indice i reçoit :

- la clé de déchiffrement secondaire $\langle sk \rangle_i$ d'indice i,
- le masque secondaire $\langle r \rangle_i$ d'indice i, et
- la donnée de démasquage $k_i$ d'indice i, qui est associée au masque secondaire $\langle r \rangle_i$ d'indice i.

Les étapes 302 et 304 peuvent survenir dans n'importe quel ordre, selon la façon dont le dispositif de contrôle 1 opère.

Dans une étape 306, le dispositif participant 3 d'indice i applique un traitement de déchiffrement et de masquage *ColMaskDecr*( ) au chiffré $c_s$ du score. Ce traitement produit une donnée $\hat{s}$ représentant le score sous une forme déchiffrée à l'aide de la clé de déchiffrement primaire puis masquée à l'aide du masque *r*. On peut ainsi noter :

$$\hat{s} = ColMaskDecr(c_s, \langle sk \rangle_i, \langle r \rangle_i)$$

Si l'on déchiffrait le chiffré $c_s$ à l'aide de la clé de déchiffrement primaire *sk,* on obtiendrait le score *s* en clair. Si l'on appliquait ensuite un masquage au score *s* en clair à l'aide du masque primaire *r,* on obtiendrait la donnée $\hat{s}$.

Or, le traitement de déchiffrement et de masquage *ColMaskDecr*( ) ne fonctionne pas selon cette séquence d'opérations. Le traitement de déchiffrement et de masquage *ColMaskDecr*( ) a pour propriété particulière de parvenir à la donnée $\hat{s}$ sans réaliser de calcul intermédiaire du score s en clair.

On va maintenant détailler un mode de réalisation du traitement de déchiffrement et de masquage *ColMaskDecr*( ) dans lequel cette propriété est obtenue. Dans ce mode de réalisation, le chiffré $c_s$ du score se présente sous la forme d'une paire de données $c_{s_a}$, $c_{s_b}$. Ces deux données constituent deux portions différentes du chiffré $c_s$.

Le dispositif participant 3 d'indice i calcule une donnée intermédiaire $\langle c_{s_b}^* \rangle_i$ d'indice i à partir des données suivantes : la partie $c_{s_b}$ du chiffré $c_s$, la clé de déchiffrement secondaire $\langle sk \rangle_i$ d'indice i, le masque $\langle r \rangle_i$ d'indice i, et un aléa $e_i$ généré par le dispositif d'indice i.

Ce calcul peut être le suivant :

$$\langle c_{\hat{s}_b} \rangle_i = c_{s_b} \langle sk \rangle_i + \langle r \rangle_i + e_i$$

Le dispositif participant 3 d'indice i envoie la donnée intermédiaire $\langle c_{\hat{s}_b} \rangle_i$ d'indice i à l'autre dispositif participant 3 d'indice j≠i . Par ailleurs, le dispositif participant 3 d'indice i reçoit une donnée intermédiaire $\langle c_{\hat{s}_b} \rangle_j$ d'indice j≠i produite par l'autre dispositif participant d'indice j≠,i.

En définitive, deux données intermédiaires $\langle c_{\hat{s}_b} \rangle_1$, $\langle c_{\hat{s}_b} \rangle_2$ sont échangées entre les deux dispositifs participants 3 d'indices respectifs 1 et 2.

Le dispositif participant 3 d'indice i calcule la donnée $\hat{s}$ à partir des données intermédiaires $\langle c_{\hat{s}_b} \rangle_1$, $\langle c_{\hat{s}_b} \rangle_2$, et à partir de la partie $c_{s_a}$ du chiffré ($c_s$) du score. Ce calcul peut être réalisé comme suit :

$$\hat{s} = \left[\left\lfloor \frac{t}{q}\left[c_{s_a} + \langle c_{\hat{s}_b} \rangle_1 + \langle c_{\hat{s}_b} \rangle_2\right]_q \right\rceil\right]_t$$

- dans lequel

    - $\langle c_{\hat{s}_b} \rangle_1$ est la donnée intermédiaire d'indice 1,
    - $\langle c_{\hat{s}_b} \rangle_2$ est la donnée intermédiaire d'indice 2,
    - $c_{s_a}$ est la deuxième partie du chiffré ($c_s$) du score,
    - $t$ et $q$ sont deux entiers constituant des paramètres d'un schéma de chiffrement de Brakerski/Fan-Vercauteren,
    - $\lfloor ... \rceil$ désigne l'opérateur d'arrondi à l'entier le plus proche,
    - $[...]_q$ désigne l'opérateur modulo q,
    - $[...]_t$ désigne l'opérateur modulo t.

Dans ce mode de réalisation, on a :

$$\hat{s} \equiv s + r$$

Dans cette équation, le signe = représente une égalité. Ainsi, la donnée $\hat{s}$ s'avère être égale à la somme du score s en clair et du masque primaire $r$. Toutefois ce n'est pas ce calcul de somme qui est mis en oeuvre par le dispositif participant 3 d'indice i. D'ailleurs, le dispositif participant 3 d'indice i n'a pas connaissance du masque primaire r, mais seulement du masque secondaire $\langle r \rangle_i$ qui en est issu.

Dans une étape 308, le dispositif participant 3 d'indice i calcule un résultat partiel $o_i$ d'indice i à partir de la donnée et de la donnée de démasquage $k_i$ d'indice i :

$$o_i = FSS.eval(\hat{s}, k_i)$$

Dans une étape 310, le dispositif participant 3 d'indice i envoie le résultat partiel $o_i$ au dispositif de contrôle 1.

Le traitement mis en oeuvre par le dispositif participant 3 d'indice i est terminé.

Comme indiqué précédemment, le traitement constitué par les étapes 302 à 310 est mis en oeuvre deux fois : une fois par le dispositif participant d'indice 1 et une fois par le dispositif participant d'indice 2. Ainsi, deux résultats partiels $o_1$, $o_2$ sont générés.

La paire de résultats partiels $o_1$, $o_2$ a pour propriété de permettre le calcul d'un résultat de contrôle o indiquant si la donnée biométrique d'épreuve x correspond ou non à la donnée biométrique de référence $y_u$. En revanche, il n'est pas possible de calculer ce résultat de contrôle sur la base d'un seul des deux résultats partiels $o_1$, $o_2$.

Dans une étape 112, le dispositif de contrôle 1 reçoit les deux résultats partiels $o_1$, $o_2$ respectivement générés et envoyés par les deux dispositifs participants 3.

Dans une étape 114, le dispositif de contrôle 1 calcule le résultat de contrôle o à partir des deux résultats partiels $o_1$, $o_2$ reçus. Comme indiqué ci-dessus, le résultat de contrôle indique si la donnée biométrique d'épreuve correspond ou non à la donnée biométrique de référence.

Dans un mode de réalisation, le résultat de contrôle o est obtenu en sommant les résultats partiels, comme suit :

$$o = o_1 + o_2$$

En définitive, les traitements cryptographiques réalisés conjointement par les deux dispositifs participants 3 et l'étape de calcul du résultat de contrôle o représentent une comparaison entre un seuil et la distance entre la donnée biométrique d'épreuve et la donnée biométrique de référence. Le seuil est défini dans la fonction FSS.Setup() utilisée pour la génération du masque primaire r, des clés de déchiffrement secondaire et des données de démasquage (le seuil est en quelque sorte encodé par ces données).

En pratique, le résultat de contrôle o peut être un booléen.

Si le résultat de contrôle o indique que la donnée biométrique d'épreuve correspond à la donnée biométrique de référence, alors il est considéré que l'individu auquel se rapporte la donnée biométrique d'épreuve x a préalablement été enrôlé auprès du serveur 2. Dans ces conditions, le processeur 10 peut commander dans une étape 116 une ouverture du portique 18, afin de permettre à l'individu d'accéder à une zone sécurisée.

Si le résultat de contrôle indique que la donnée biométrique d'épreuve ne correspond pas à la donnée biométrique de référence, alors il est considéré que l'individu contrôlé n'est pas l'individu de référence auquel se rapporte la donnée biométrique de référence $y_u$.

Les étapes qui précèdent (en particulier celles mises en oeuvre les dispositifs participants 3) peuvent être mise en oeuvre U fois pour différents chiffrés stockés par le serveur de stockage 2, et se rapportant à des données biométriques de référence différentes $y_1 \ldots y_u \ldots y_U$. Ces U mises en oeuvre peuvent être séquentielles. En variante, on peut donc lancer U processus en parallèle mettant chacun en oeuvre les étape 202 à 116 décrites précédemment, et agréger les résultats finaux à l'étape 308 (donc $o_i = \Sigma_u o_{i,u}$), ou à l'étape 114 (donc $o = \Sigma_i \Sigma_u o_{i,u}$).

Le procédé décrit précédemment peut faire l'objet d'autres variantes.

On remarquera que dans le mode de réalisation de procédé représenté sur la figure 3 et discuté jusqu'ici, des nouveaux masques, de nouvelles données de démasquage et des nouvelles clés de déchiffrement secondaires sont générés aux étapes 404, 408 à chaque fois qu'un chiffré de score est généré lors d'une mise en oeuvre de l'étape 204. Ainsi, pour i étant égal à 1 et 2, le masque secondaire d'indice i, la donnée de démasquage d'indice i et la clé de déchiffrement secondaire d'indice i associées constitues des données à usage unique pour un chiffré particulier calculé lors d'une mise en oeuvre d'une étape 204. Ce mode de réalisation est particulièrement robuste à des attaques par rejeu.

Dans un autre mode de réalisation, il pourrait être envisagé que les données générées aux étapes 404, 408 soient des données à usage unique pour une donnée biométrique d'épreuve x, ce qui implique que ces données sont réutilisées plusieurs fois pour différents utilisateurs de référence référencés dans la base de données du serveur de stockage 2, lors d'un contrôle d'identité de l'individu auquel x se rapporte. Dans cet autre mode de réalisation, le dispositif de contrôle 1 peut requérir la génération de nouvelles données à usage unique auprès du serveur de confiance 4 à chaque fois qu'une nouvelle donnée biométrique d'épreuve x est acquise.

Bien que cela soit avantageux en termes de sécurité, le masque secondaire d'indice i, la donnée de démasquage d'indice i et la clé de déchiffrement secondaire d'indice i associées peuvent ne pas être des données à usage unique.

Par ailleurs, il a été supposé jusqu'ici que les données fournies par le serveur 4 (clés secondaires, masques, données de démasquage) sont générées après la réception d'une donnée biométrique x. Toutefois, ceci n'est pas obligatoire. En variante, ces données peuvent être générées au cours de la phase préliminaire durant laquelle les clés pk et sk sont générées et être mémorisées dans les mémoires respectives des dispositifs participants 3 en avance, donc avant l'acquisition de la donnée biométrique x. Ainsi, tout ou partie des étapes 404, 406, 408 ,410 et 304 peut survenir avant l'étape 102 (dans ce cas, l'étape 108 n'est pas mise en oeuvre, et l'étape 402 non plus).

Dans un mode de réalisation particulièrement avantageux, seulement une paire de dispositifs participants 3 d'indices respectifs 1 et 2 est utilisée. Les inventeurs ont pu constater que ce mode de réalisation est simple de mise en oeuvre, tout en étant raisonnablement rapide et sécurisé. Toutefois, il est également possible d'utiliser plusieurs paires de dispositifs participants mettant en oeuvre le procédé décrit plus haut. Les $\langle c_{sb}^{\hat{}} \rangle_j$ des dispositifs participants 3 d'une paire, ne sont échangés qu'entre les dispositifs participants 3 de ladite paire. Par ailleurs, pour chaque paire de dispositifs participants 3, la somme des résultats partiels de la paire est égale au résultat de contrôle o. En revanche, le serveur de confiance 4 peut fournir à des paires de participants différentes des clés secondaire et des données de masquage/démasquage différentes. Le bénéfice d'utiliser plusieurs paires de dispositifs 3 est de faire de la redondance pour s'assurer qu'il n'y a pas eu une erreur de calcul par une paire, par exemple en cas d'attaques.

Dans ce qui précède, il a été discuté une application particulière du procédé de contrôle d'identité, dans laquelle le résultat du contrôle conditionne un accès à une zone sécurisé. Il est toutefois entendu que le procédé décrit peut être utilisé pour d'autres applications.

## Revendications

1.  Procédé comprenant :

    - calcul (204) d'un chiffré ($c_s$) d'un score représentant une distance entre une donnée biométrique d'épreuve (x) se rapportant à un individu et une donnée biométrique de référence ($y_u$), le chiffré ($c_s$) du score étant préalablement calculé à partir de la donnée biométrique d'épreuve et d'un chiffré ($c_{y_u}$) de la donnée biométrique de référence, le chiffré de la donnée biométrique de référence résultant d'un chiffrement de la donnée biométrique de référence ($y_u$) à l'aide d'une clé de chiffrement primaire (pk),
    - pour i étant égal à 1 et 2, mise en oeuvre des étapes suivantes par un dispositif d'indice i:

        - application (306) d'un traitement de déchiffrement et de masquage au chiffré ($c_s$) du score à l'aide d'une clé de déchiffrement secondaire ($\langle sk \rangle_i$) d'indice i et d'un masque secondaire ($\langle r \rangle_i$) d'indice i, le traitement de déchiffrage et de masquage produisant une donnée ($\hat{s}$) représentant le score sous une forme déchiffrée et masquée par un masque primaire (r), et ce sans avoir calculé le score en clair,
        - génération (308) d'un résultat partiel ($o_i$) d'indice i à partir de la donnée ($\hat{s}$) et d'une donnée de démasquage ($k_i$) d'indice i associée au masque secondaire ($\langle r \rangle_i$) d'indice i,

    - dans lequel :

les dispositifs d'indices respectifs 1 et 2 sont distincts,

les clés de déchiffrement secondaires ($\langle sk \rangle_1$, $\langle sk \rangle_2$) d'indices respectifs 1 et 2 sont issues d'une clé de déchiffrement primaire ($sk$) associée à la clé de chiffrement ($pk$),

les masques secondaires ($\langle r \rangle_1$, $\langle r \rangle_2$) d'indices respectifs 1 et 2 sont issus du masque primaire ($r$),

les résultats partiels ($o_1$, $o_2$) d'indices respectifs 1 et 2 permettent le calcul d'un résultat de contrôle ($o$) indiquant si la donnée biométrique d'épreuve correspond ou non à la donnée biométrique de référence.

2. Procédé selon la revendication précédente, dans lequel le traitement de déchiffrement et de masquage mis en en oeuvre par le dispositif d'indice i comprend les étapes suivantes :

calcul d'une donnée intermédiaire ($\langle c_{\hat{s}_b} \rangle_i$) d'indice i à partir des données suivantes :

une première partie ($c_{s_b}$) du chiffré ($c_s$) du score,
la clé de déchiffrement secondaire ($\langle sk \rangle_i$) d'indice i,
le masque secondaire ($\langle r \rangle_i$) d'indice i, et
un aléa ($e_i$) généré par le dispositif d'indice i,

réception d'une donnée intermédiaire ($\langle c_{s_b} \rangle_j$) d'indice j envoyée par le dispositif d'indice j≠i,
calcul de la donnée ($\hat{s}$) représentant le score sous une forme déchiffrée à l'aide de la clé de déchiffrement secondaire $\langle sk \rangle_i$ d'indice i puis masquée par le masque ($r$), à partir des données suivantes :

les données intermédiaires ($\langle c_{\hat{s}_b} \rangle_1$, $\langle c_{\hat{s}_b} \rangle_2$) d'indices respectifs 1 et 2,
une deuxième partie ($c_{s_a}$) du chiffré ($c_s$) du score.

3. Procédé selon la revendication précédente, dans lequel la donnée intermédiaire $\langle c_{\hat{s}_b} \rangle_i$ d'indice i est calculée comme suit :

$$\langle c_{\hat{s}_b} \rangle_i = c_{s_b} \langle sk \rangle_i + \langle r \rangle_i + e_i$$

dans lequel

$c_{s_b}$ est la première partie du chiffré ($c_s$) du score,
$\langle sk \rangle_i$ est la clé de déchiffrement secondaire

d'indice i,
$\langle r \rangle_i$ est le masque secondaire d'indice i,
$e_i$ est l'aléa généré par le dispositif d'indice i.

4. Procédé selon l'une quelconque des revendications 2 et 3, dans lequel la donnée ($\hat{s}$) représentant le score sous une forme déchiffrée à l'aide de la clé de déchiffrement secondaire $\langle sk \rangle_i$ d'indice i puis masquée à l'aide du masque primaire ($r$) est calculée comme suit :

$$\hat{s} = \left[ \left\lfloor \frac{t}{q} \left[ c_{s_a} + \langle c_{\hat{s}_b} \rangle_1 + \langle c_{\hat{s}_b} \rangle_2 \right]_q \right\rceil \right]_t$$

dans lequel

$\langle c_{\hat{s}_b} \rangle_1$ est la donnée intermédiaire d'indice 1,
$\langle c_{\hat{s}_b} \rangle_2$ est la donnée intermédiaire d'indice 2,
$c_a$ est la deuxième partie du chiffré ($c_s$) du score,
$t$ et $q$ sont deux entiers constituant des paramètres d'un schéma de chiffrement de Brakerski/Fan-Vercauteren,
$\lfloor ... \rceil$ désigne l'opérateur d'arrondi à l'entier le plus proche,
$[...]_q$ désigne l'opérateur modulo q,
$[...]_t$ désigne l'opérateur modulo t.

5. Procédé selon l'une quelconque des revendications précédentes, dans le résultat de contrôle ($o$) est égal à la somme des résultats partiels ($o_1$, $o_2$) d'indices respectifs 1 et 2.

6. Procédé selon l'une quelconque des revendications précédentes, dans lequel au moins une des données suivantes est une donnée à usage unique pour la donnée biométrique d'épreuve ($x$), voire pour le chiffré ($c_s$) du score :

le masque secondaire d'indice i,
la donnée de démasquage d'indice i,
la clé de déchiffrement secondaire d'indice i.

7. Procédé selon l'une quelconque des revendications précédentes, dans lequel le calcul du chiffré ($c_s$) du score est un calcul linéaire ou polynômial.

8. Procédé selon l'une quelconque des revendications précédentes, dans lequel

le calcul du chiffré ($c_s$) est mis en oeuvre mis en oeuvre par un serveur distinct des dispositifs d'indices 1 et 2, et/ou

• le résultat de sortie est calculé à partir des résultats partiels ($o_1$,$o_2$) d'indices respectifs 1 et 2 par un dispositif de sortie distinct des dispositifs d'indices 1 et 2.

9. Produit programme d'ordinateur comprenant des instructions de code de programme pour l'exécution des étapes du procédé selon l'une quelconques des revendications précédentes, lorsque ce programme est exécuté par un système comprenant les dispositifs d'indices respectifs 1 et 2.

10. Mémoire lisible par ordinateur stockant des instructions exécutables par un dispositif pour l'exécution des étapes du procédé selon l'une quelconque des revendications 1 à 8.

11. Système comprenant :

• un serveur (2) configuré pour calculer un chiffré ($c_s$) d'un score représentant une distance entre une donnée biométrique d'épreuve ($x$) se rapportant à un individu et une donnée biométrique de référence ($y_u$), le chiffré ($c_s$) du score étant préalablement calculé à partir de la donnée biométrique d'épreuve et d'un chiffré ($c_{y_u}$) de la donnée biométrique de référence, le chiffré de la donnée biométrique de référence résultant d'un chiffrement de la donnée biométrique de référence ($y_u$) à l'aide d'une clé de chiffrement primaire *(pk)*,
• deux dispositifs (3) d'indices respectifs 1 et 2, dans lequel pour i étant égal à 1 et 2, le dispositif d'indice i est configuré pour :

• appliquer un traitement de déchiffrement et de masquage au chiffré ($c_s$) du score à l'aide d'une clé de déchiffrement secondaire ($\langle sk \rangle_i$) d'indice i et d'un masque secondaire ($\langle r \rangle_i$) d'indice i, le traitement de déchiffrage et de masquage produisant une donnée ($\hat{s}$) représentant le score sous une forme déchiffrée et masquée par un masque primaire (r), et ce sans avoir calculé le score en clair,
• génération d'un résultat partiel ($o_i$) d'indice i à partir de la donnée ($\hat{s}$) et d'une donnée de démasquage ($k_i$) d'indice i associée au masque secondaire ($\langle r \rangle_i$) d'indice i,

• dans lequel :

• les clés de déchiffrement secondaires ($\langle sk \rangle_1$, $\langle sk \rangle_2$) d'indices respectifs 1 et 2 sont issues d'une clé de déchiffrement primaire ($sk$) associée à la clé de chiffrement *(pk)*,
• les masques secondaires ($\langle r \rangle_1$, $\langle r \rangle_2$) d'indices respectifs 1 et 2 sont issus du masque primaire ($r$),
• les résultats partiels ($o_1$, $o_2$) d'indices respectifs 1 et 2 permettent le calcul d'un résultat de contrôle (o) indiquant si la donnée biométrique d'épreuve correspond ou non à la donnée biométrique de référence.

Figure 1

Figure 2

Figure 3

**EP 4 425 818 A1**

Europäisches Patentamt
European Patent Office
Office européen des brevets

# RAPPORT DE RECHERCHE EUROPEENNE

Numéro de la demande

EP 23 21 9111

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X,D | IBARRONDO ALBERTO IBARROND@EURECOM FR ET AL: "Colmade: Collaborative Masking in Auditable Decryption for BFV-based Homomorphic Encryption", ARCHITECTUAL SUPPORT FOR PROGRAMMING LANGUAGES AND OPERATING SYSTEMS, IEEE COMPUTER SOCIETY PRESS, 10662 LOS VAQUEROS CIRCLE PO BOX 3014 LOS ALAMITOS, CA 90720-1264 USA, 23 juin 2022 (2022-06-23), pages 129-139, XP058816410, DOI: 10.1145/3531536.3532952 ISBN: 978-0-8186-0805-6 | 1-11 | INV. H04L9/00 |
| Y | * section 3; figure 3 * | 1-11 | |
| | ───── | | |
| Y,D | ALBERTO IBARRONDO ET AL: "Funshade: Functional Secret Sharing for Two-Party Secure Thresholded Distance Evaluation", IACR, INTERNATIONAL ASSOCIATION FOR CRYPTOLOGIC RESEARCH , vol. 20221205:100225 5 décembre 2022 (2022-12-05), pages 1-12, XP061076104, Extrait de l'Internet: URL:https://eprint.iacr.org/archive/2022/1688/1670234545.pdf [extrait le 2022-12-05] * section 3.4 * | 1-11 | DOMAINES TECHNIQUES RECHERCHES (IPC) H04L |
| | ───── | | |

Le présent rapport a été établi pour toutes les revendications

| Lieu de la recherche | Date d'achèvement de la recherche | Examinateur |
|---|---|---|
| Munich | 6 mai 2024 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................................
& : membre de la même famille, document correspondant

EPO FORM 1503 03.82 (P04C02)

13